# EUROPEAN PATENT APPLICATION

(11) **EP 3 916 599 A1**
(43) Date of publication of application: **01.12.2021**
(21) Application number: 20176297.8
(22) Date of filing: 25.05.2020
(51) Int. Cl.: G06F 21/57, G06F 21/12, G05B 19/05

(54) **METHOD FOR PROTECTING SOFTWARE MODULES ON EDGE DEVICES AND EDGE DEVICE**

(71) Applicant: Siemens Aktiengesellschaft, 80333 München (DE)
(72) Inventor: Frank, Johannes, 81673 München (DE); Soler Garrido, Josep, 81547 München (DE)

(57) **Abstract**

Edge software deployment is enhanced by including a cryptographic sealing operation on edge applications, algorithms and/or machine learning models so that they can only be accessed by the intended devices, running the intended software and optionally only when connected to specific PLC controllers. The method allows deploying applications and AI models on edge devices with a guarantee that they will only run on specific hardware units. The protection mechanism prevents their extraction if the units are compromised or physically accessed. To this end, a policy creation step (22) creates a policy for protecting an edge software module on an edge device, with the policy creation step (22) including a link-to-PLC step (22a), linking the policy to a first PLC, using a public key (PLC-PK) from the first PLC, and a link-to-PCR-values step (22b), linking the policy to specific PCR values of a trusted platform module of the edge device. A deployment-and-sealing step (23) deploys the edge software module on the edge device and seals it with the policy.

## Description

An increasing number of important software tasks in industrial automation systems are being offloaded from programmable logic controllers (in the following: PLCs) to factory-level IT environments such as industrial edge. In these settings, the PLC is still the brain responsible for the correct functioning of the automation system but must rely on external devices to perform complex computations, for instance executing machine learning algorithms, and report the results back to the controller for decision making.

While PLCs in critical automation environments can be effectively hardened to ensure integrity of the programs executed, the IT environments are more dynamic in terms of the applications deployed, where they come from, and their update lifecycle, making them more prone to misconfiguration or compromise.

Current edge deployments rely on implicit trust from the PLC that the correct applications and algorithms are being executed by the right devices. Furthermore, algorithms deployed in the edge environment are more susceptible to being exposed to third parties, resulting potentially in unauthorized deployment on other systems, potential loss of IP, and even security risks to the automation system, for instance if leaked machine learning models are subject to adversarial analysis that produce specially crafted perturbations to the inputs that make the model produce incorrect results.

Currently, edge data analytics/AI applications and automation programs that need to work together are still deployed independently and matching the right application to the right automation program is done manually. In more advanced deployments, integrity of the entire solution needs to rely on first, a tight coupling of the lifecycles of automation programs and edge applications in order to implement a configuration management free from failures, and second, a wide security perimeter that includes all the IT devices that execute algorithms which are critical for the automation system. However, both of these conditions have been consistently shown to be very difficult to achieve a hundred percent of the time.

Similarly, important assets containing IP or sensitive process information, such as algorithms or machine learning models, can be protected via full disk encryption. Disk encryption can be enhanced by the use of so-called trusted platform modules (in the following: TPM) which protect secret keys on the devices and shield them from physical tampering or brute force attacks, ensuring that critical assets are only unencrypted if the integrity of the hardware and software is verified. However, this approach is insufficient if an attacker has physical access to the entire device running verified software. In this case, additional authentication methods are required, such as entering a password that only legitimate users know. However, this relies on manual user interaction which can be very limiting in factory automation environments.

It is an object of the invention to provide a method for protecting software modules on edge devices and an edge device that provide an alternative to the solutions known from the state of the art.

According to the method for protecting software modules on edge devices, one or more processors execute
- a policy creation step, creating a policy for protecting an edge software module on an edge device, with the policy creation step including
   - a link-to-PLC step, linking the policy to a first PLC, using a public key from the first PLC, and
   - a link-to-PCR-values step, linking the policy to specific PCR values of a trusted platform module of the edge device,
- a deployment-and-sealing step, deploying the edge software module on the edge device and sealing it with the policy.

As an alternative or in addition, the one or more processors execute
- a PLC-challenge-and-response step with a cryptographic challenge-response authentication, performed by sending a challenge to the first PLC and verifying a response from the first PLC with the trusted platform module of the edge device, using the public key of the first PLC,
- an unsealing step, unsealing the policy and the edge software module,
- an application start step, executing the edge software module on the edge device.

The method thus provides an automated process for deploying and/or running an edge software module on an edge device while protecting the edge software module.

The following advantages and explanations are not necessarily the result of the object of the independent claims. Rather, they may be advantages and explanations that only apply to certain embodiments or variants.

For example, the one or more processors can be processors of the edge device, a PLC, a network of devices, an edge backend and the like. The steps may be executed by the same processor on the same device or by different processors on different devices.

The proposed enhancement to the edge software deployment mechanisms includes a cryptographic sealing operation on edge applications, algorithms and/or machine learning models so that they can only be accessed by the intended devices, running the intended software and optionally only when connected to specific PLC controllers.

The method allows deploying applications and AI models on edge devices with a guarantee that they will only run on specific hardware units. The protection mechanism prevents their extraction if the units are compromised or physically accessed.

Furthermore, the first PLC is actively involved in the unencryption of critical assets on the edge device, so that these are protected in case of loss or theft of the complete edge device.

An aspect of the solution relies on trusted computing capabilities on industrial PCs in order to implement, via cryptographic methods involving a trusted platform module (TPM), a method to protect the applications and algorithms in edge devices so that they are only accessible on trusted, uncompromised edge devices.

An aspect of the method can be seen as a specific application deployment protocol that enables sealing of critical assets and algorithms and enables the first PLC to perform an attestation of edge unit integrity.

In an embodiment of the method, unsealing the policy requires that PCR values of the trusted platform module of the edge device match a first criterion, and that the cryptographic challenge-response authentication performed by the first PLC is successful.

In a further embodiment of the method, the first criterion is that the PCR values of the trusted platform module of the edge device match entries on a white list of known good values, indicating an uncompromised base system.

In another embodiment of the method, the edge software module is unsealed in a volatile memory of the edge device.

This embodiment ensures that the edge software module is not persistent on the device in an unsealed form

In another embodiment of the method, the edge software module is an application, an algorithm and/or a machine learning model.

In another embodiment of the method, the one or more processors execute prior to the deployment-and-sealing step a device verification step, in which an identity and software integrity check on the edge device is performed by an edge backend, using an edge signing key previously generated during an onboarding procedure.

In another embodiment of the method, the first PLC encodes an internal state in the response of the PLC-challenge-and-response step.

The internal state can include any additional information that a provider or customer want to add as a condition to unseal the edge software module, for example a specific running program on the first PLC, or even interaction with a machine operator. For example, the additional information could be identification and maintenance (I&M) data, the manufacturer ID, order number, serial number and the hardware and firmware version. Additionally, a software checksum of Function Blocks in the PLC program can be used to verify a specific running program on the PLC.

In another embodiment of the method, the one or more processors execute prior to the PLC-challenge-and-response step a system startup step, performing a start-up of a system of the edge device up to the point before loading the edge software module, and a software verification step, using the trusted platform module of the edge device to ensure the integrity of software components on the edge device.

For example, the integrity from the BIOS up to a container runtime for applications can be verified, leading to a set of PCR values equivalent to those available during policy creation on the deployment process.

In another embodiment of the method, the one or more processors execute after the PLC-challenge-and-response step a PCR measurement step, obtaining PCR values from the trusted platform module of the edge device, a PLC update step, extending the PCR values with a one-way hash of code and/or data of the edge software module, and a step in which the extended PCR values and an edge signing key of the edge device are securely deployed to the first PLC.

The edge device stores an edge software module that has been deployed and sealed on the edge device with the method.

The computer-readable storage media are storing instructions executable by one or more processors of a computer system, wherein execution of the instructions causes the computer system to perform the method.

The computer program is being executed by one or more processors of a computer system and performs the method. The computer system can also consist of a network of devices such as PLCs, edge devices, an edge backend, an asset management component and the like.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. Included in the drawings are the following Figures:
- Fig. 1: showing a scenario for deploying edge software in the form of edge software modules EA1, EA2, EA3 on edge units EU1, EU2, EU3,
- Fig. 2: showing an embodiment of an automated process for deploying an edge software module to an edge unit,
- Fig. 3: showing an embodiment of an automated process for running a deployed edge software module on an edge device, and
- Fig. 4: showing a PLC driven remote attestation of an edge device.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

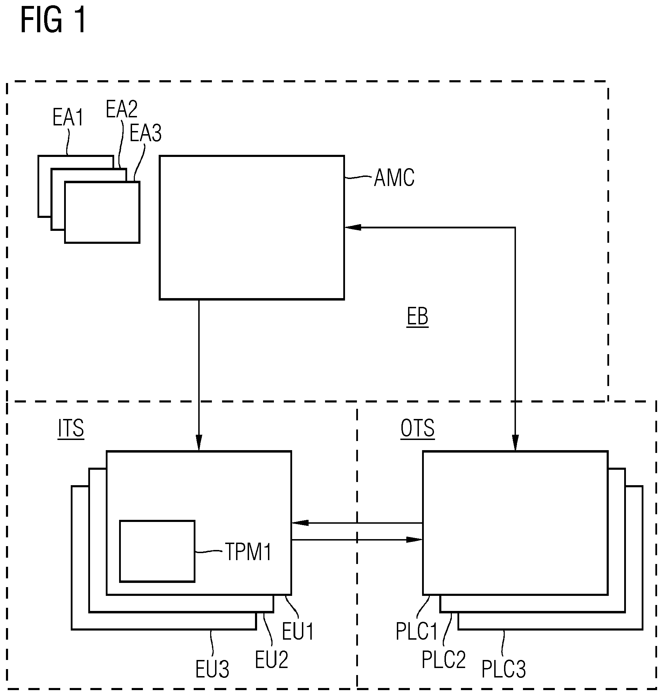

Fig. 1 shows a scenario for deploying edge software in the form of edge software modules EA1, EA2, EA3 on edge units EU1, EU2, EU3. The edge software modules EA1, EA2, EA3 can be any kind of software application, algorithm and/or machine learning model that is executable on an edge device.

The edge units EU1, EU2, EU3 are edge devices, for example industrial PCs, that are equipped with so-called trusted platform modules (in the following: TPM), i.e. secure microcontroller chips designed to perform cryptographic operations without ever exposing secret keys to the main processing unit and offering tamper resistance. They usually serve as a root of trust from which a chain of trust can be created, by performing cryptographic operations (e.g. hashes) that fingerprint the software components as they are being loaded (from boot loader up to the actual applications) in order to ensure their integrity before handing them control of the device. The results of these operations, which cannot be forged or reverted, provide a guarantee that the machine is running the expected software. For example, a first edge unit EU1 is equipped with a first TPM TPM1.

An edge backend EB can be cloud based or on premises. It manages the software and operations of the edge units EU1, EU2, EU3 in an information technology system ITS and PLCs PLC1, PLC2, PLC3 in an operational technology system OTS of an automation system.

The edge backend EB provides an asset management component AMC with which a technology provider and its customers monitor the edge units EU1, EU2, EU3 and select which edge software modules EA1, EA2, EA3 get installed on them, possibly including AI and data analytics based applications containing sensitive know-how and that provide input to critical control programs.

Verification of the identity of the first edge unit EU1 (e.g. via unique signing key stored in the first TPM TPM1) can be performed already from the moment the first edge unit EU1 is onboarded and the base system is installed. The first TPM TPM1 on the first edge unit EU1 contains a unique endorsement key pair (EK) from which an entire hierarchy of keys can be generated, including signing and encryption keys for data and algorithmic assets. These keys can be leveraged by the edge backend EB and any of the PLCs PLC1, PLC2, PLC3 to verify identity and integrity of the first edge unit EU1 and the software it is running.

For instance, integrity checks can be carried out by performing measurements on the software components as they are being loaded on so-called PCR (platform configuration registers) on the first TPM TPM1. Values on the PCR can be extended by one-way hashes of the programs to be loaded and their associated data. The values produced by such measurements must match expected values before handing control of the first edge unit EU1 to the loaded software, ensuring integrity.

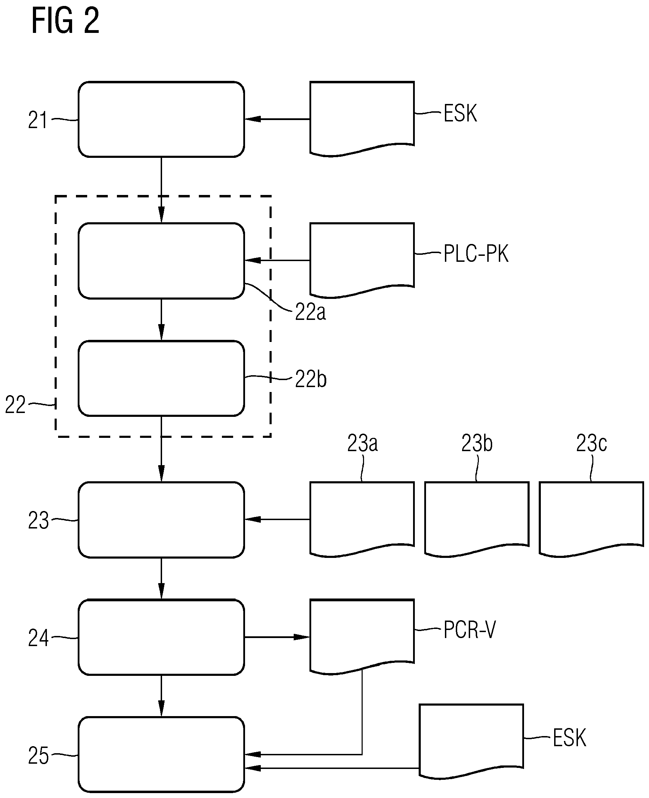

The interactions between the asset management component AMC in the edge backend EB and the PLCs PLC1, PLC2, PLC3, the edge units EU1, EU2, EU3 and their TPM modules forms the basis of a trusted computing environment. The PLCs PLC1, PLC2, PLC3 are using the edge units EU1, EU2, EU3 for offloading algorithms. Further embodiments of this trusted computing environment as well as specific methods for protecting the execution of the edge software modules EA1, EA2, EA3 in the automation system will be described with reference to Fig. 2-4.

Fig. 2 shows an embodiment of an automated process for deploying one of the edge software modules EA1, EA2, EA3 of Fig. 1 to one of the edge units EU1, EU2, EU3 of Fig. 1 in a process that subsequently will allow one of the PLCs PLC1, PLC2, PLC3 of Fig. 1 to ensure that results are computed by the right edge unit running the expected software.

The steps are:
In a device verification step 21 an identity and software integrity check on the edge device (one of the edge units EU1, EU2, EU3 shown in Fig. 1) is performed by the edge backend prior to deployment of new applications, using an edge signing key ESK previously generated during onboarding, as described above.

In a policy creation step 22, first a link-to-PLC step 22a is performed using a PLC public key PLC-PK from one of the PLCs. Then a link-to-PCR-values step 22b is performed. In other words, a policy for protection of the edge software module that is to be deployed to the edge device is created and linked to a specific PLC and specific PCR values of the TPM of the edge device. The policy thus specifies that in order to unseal it, two conditions must be met:
a) The state of the PCR of the TPM of the edge device must match those on a white list of known good values, indicating an uncompromised base system.
b) A cryptographic challenge-response authentication is performed by the PLC.

Afterwards, a deployment-and-sealing step 23 is performed in order to seal the edge software module with the policy specified. The edge software module is stored on the edge device. As described above, the edge software module can be an application 23a, an algorithm 23b and/or a machine learning model 23c.

Then, a PCR measurement step 24 is performed in order to obtain PCR values PCR-V from the TPM of the edge device.

In a PLC update step 25, the PCR values PCR-V are extended with a one-way hash of the code and/or data of the deployed edge software module. The valid extended PCR values and the public signing key of the edge device (edge signing key ESK) are securely deployed to the associated PLC or PLCs, which will subsequently use them for attestation. This can, for example, be facilitated by the Siemens engineering software TIA Portal, which includes a certificate manager.

The public key of the edge device (edge signing key ESK) can be placed in a certificate that is signed by a Certification Authority. Then the signed certificate can be imported along with root and intermediate certificates (forming a certificate chain) to the certificate manager as trusted certificates and assigned to one or more particular PLCs in the TIA Portal engineering project. During the download of the project's hardware configuration the certificates are transferred and stored on one or more specified devices. While the deployment of the public key respectively certificate happens rather rarely, the valid PCR values might change more frequently due to an update of the edge software module. Therefore, they can be updated and stored during runtime within a new kind of System Function Block (in the following: SFB) that is used in the PLC program. SFBs have only an input- and output-interface that is visible to the user. The static data area and implementation logic is hidden and therefore suitable for the secure update and storage of the PCR values.

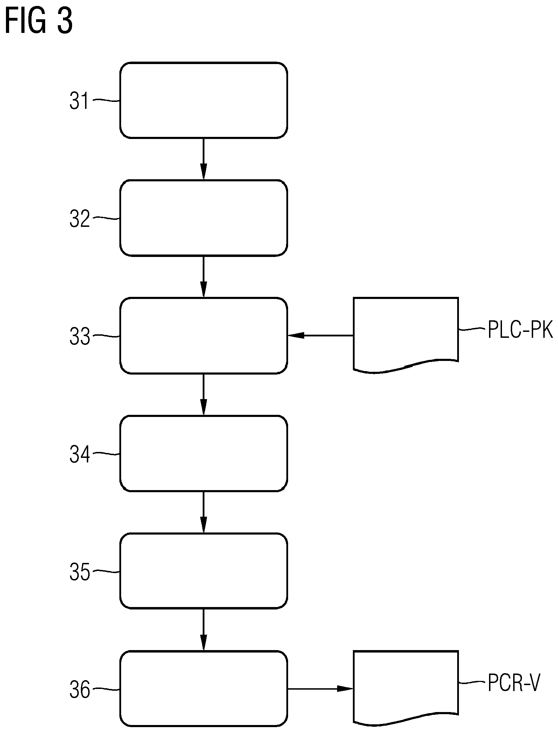

Fig. 3 shows an embodiment of an automated process for running a deployed edge software module on an edge device.

In a system startup step 31 a normal start-up of the system of the edge device up to the point before loading the edge software module is performed.

In a software verification step 32, the TPM of the edge device can be optionally used at this point to ensure the integrity of all the software components involved, from the BIOS up to a container runtime for applications, leading to a set of PCR values equivalent to those available during policy creation on the deployment process as described with regard to Fig. 2.

In a PLC-challenge-and-response step 33, a challenge is sent to the PLC that is linked to the edge device, which includes a cryptographic nonce, i.e. a unique random number generated by the TPM of the edge device. The PLC encodes its state together with the nonce in a message using its private key, and the TPM of the edge device verifies its authenticity using the public key of the PLC PLC-PK, satisfying the policy previously specified.

The state of the PLC that is encoded in the PLC-challenge-and-response step 33 can include any additional information that a provider or its customers want to add as a condition to unseal the edge software module, for example a specific running program on the PLC, or even interaction with a machine operator. For example, the identification and maintenance (I&M) data of a SIMATIC S7 PLC device can be read during runtime with the instruction "Get_IM_Data". The instruction returns the device-specific basic information of a device and contains information such as the manufacturer ID, order number, serial number and the hardware and firmware version. Only read access is possible to this data. Additionally, a software checksum of Function Blocks in the PLC program can be read with the instruction "GetChecksum" to verify a specific running program on the PLC.

Once the policy is satisfied, the edge software module (and corresponding data assets, if necessary) can be unsealed in an unsealing step 34, for instance in a volatile memory (RAM) in order to ensure they are not persistent on the device in an unsealed form.

Execution of the edge software module is then started in an application start step 35.

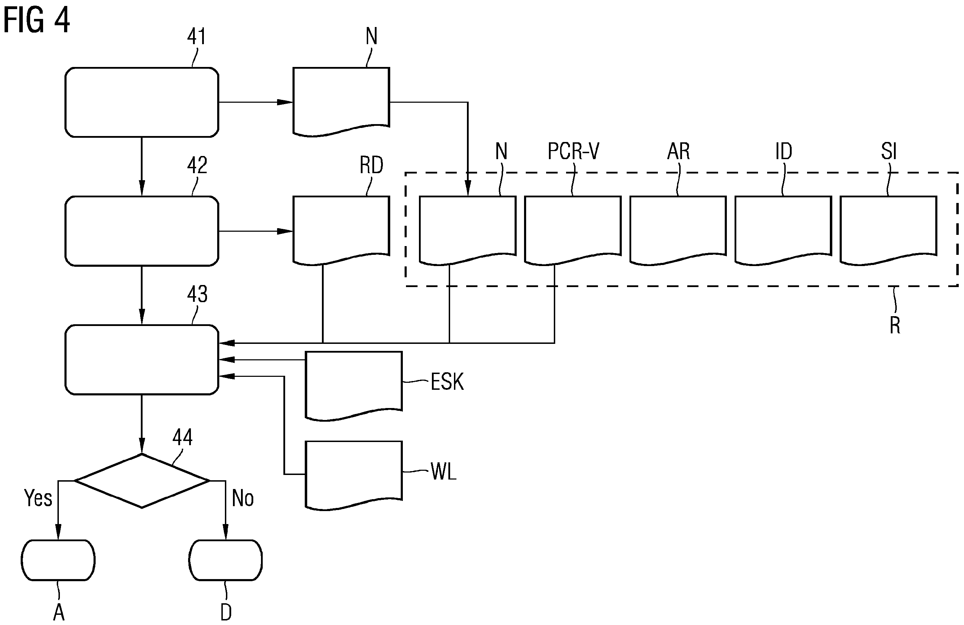

From this moment on, the edge device must respond to periodic attestation challenges coming from the PLC in a recurring periodic attestation step 36, sending the relevant PCR values PCR-V of the relevant PCR to the PLC as described in the next section regarding Fig. 4.

Fig. 4 shows a PLC driven remote attestation of an edge device, for example one of the edge units EU1, EU2, EU3 depicted in Fig. 1. The PLC is for example one of the PLCs PLC1, PLC2, PLC3 depicted in Fig. 1.

During operation, as the PLC is expected to receive critical input from algorithm execution performed on the edge device, it requires periodic attestation offering cryptographic proof of the identity and software state of the edge device. This process is depicted in Figure 4.

The steps are:
In a PLC challenge step 41, the PLC periodically initiates a challenge by generating with a random number generator a cryptographic nonce N and making it available to the edge device. The cryptographic nonce N can be generated by a function that is part of a library of software functions provided by the PLC. As an alternative, the PLC can be equipped with a TPM with a cryptographically strong random number generator, which can be controlled via a SFB instruction, or as a further alternative, a custom setup with a more robust source entropy for random number generation, for example based on other sources of noise in the automation system such as application specific sensor devices.

In an edge response step 42, the edge device produces a response R including the state of the relevant PCR as PCR values PCR-V and the actual results from algorithm execution as algorithm results AR. In case some input parameters for algorithm execution were provided by the PLC, they can be returned as input data ID in the response R for validation, together with any other relevant information, for example sensor information SI about any additional sensor devices used to produce input for algorithm execution on the edge device.

As part of the edge response step 42, the edge device sends the response R along with response digest RD, which is a summary (e.g. hash) of the response R and signed with a protected signing key from the TPM of the edge device.

In a response verification step 43, the PLC verifies the validity of the response R by
a) checking the nonce N in the response R matches the one previously generated,
b) verifying that the response digest RD is signed by the relevant edge device, using knowledge of an edge signing key ESK, which is the public key of the edge device,
c) checking that the response digest RD corresponds to the response R received, and
d) verifying that the PCR values PCR-V in the response R are included on a white list WL of valid PCR values that it had received during the application deployment step.

Finally, in a pass evaluation step 44, the PLC proceeds to an accept results step A and uses the results from the algorithm execution on the edge device only if the previous validation steps are successful. Otherwise, the results are discarded as the PLC proceeds to a discard results step D.

This process can be repeated as often as needed depending on the communication mechanism used between the PLC and the edge device. For communication using a permanent session (e.g. a secure connection from the edge device to e.g. an OPC UA server on the PLC), it may be enough to perform the verification of the identity of the edge device once when the connection is established.

In the case of a more loosely-coupled communication method, e.g. when the PLC uses a MQTT client to communicate with the edge devices via a broker independent of the PLC, or in critical applications, it may be desired to generate a new challenge periodically, even for every new result provided by the edge device.

By following the steps as described in the context of Figure 4, a program running on the PLC, which relies on computations performed in the edge device, is able to verify that the received results are provided by the expected edge unit which is running the expected applications and algorithms.

The PLC driven remote attestation provides a fail-safe mechanism, so that if for example a mission critical AI algorithm designed to detect a dangerous situation via a camera device, or to predict and prevent system malfunction via anomaly detection, is incorrectly deployed, corrupted or compromised, a method is in place for a program running on the PLC to become aware of this situation.

In other words, a mechanism for a PLC controller to perform integrity measurements of the edge units running algorithms for it is provided. attestation mechanism for PLC controllers to periodically verify the identity and integrity of the edge devices where data analytics and AI algorithms are offloaded.

The method can be executed by a processor such as a microcontroller or a microprocessor, by an Application Specific Integrated Circuit (ASIC), by any kind of computer, including mobile computing devices such as tablet computers, smartphones or laptops, or by one or more servers in a control room or cloud. For example, a processor, controller, or integrated circuit of the computer system and/or another processor may be configured to implement the acts described herein.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

## Claims

1. A method for protecting software modules on edge devices, wherein one or more processors execute
- a policy creation step (22), creating a policy for protecting an edge software module (EA1) on an edge device (EU1), with the policy creation step (22) including
- a link-to-PLC step (22a), linking the policy to a first PLC (PLC1), using a public key (PLC-PK) from the first PLC (PLC1), and
- a link-to-PCR-values step (22b), linking the policy to specific PCR values of a trusted platform module (TPM1) of the edge device (EU1),
- a deployment-and-sealing step (23), deploying the edge software module (EA1) on the edge device (EU1) and sealing it with the policy,
and/or
- a PLC-challenge-and-response step (33) with a cryptographic challenge-response authentication, performed by sending a challenge to the first PLC (PLC1) and verifying a response from the first PLC (PLC1) with the trusted platform module (TPM1) of the edge device (EU1), using the public key of the first PLC (PLC-PK),
- an unsealing step (34), unsealing the policy and the edge software module (EA1),
- an application start step (35), executing the edge software module (EA1) on the edge device (EU1).

2. The method according to claim 1,
- wherein unsealing the policy requires that
a) PCR values of the trusted platform module (TPM1) of the edge device (EU1) match a first criterion, and
b) the cryptographic challenge-response authentication performed by the first PLC (PLC1) is successful.

3. The method according to claim 2,
- wherein the first criterion is that the PCR values of the trusted platform module (TPM1) of the edge device (EU1) match entries on a white list of known good values, indicating an uncompromised base system.

4. The method according to any of the preceding claims,
- wherein the edge software module (EA1) is unsealed in a volatile memory of the edge device (EU1).

5. The method according to any of the preceding claims,
- wherein the edge software module (EA1) is an application (23a), an algorithm (23b) and/or a machine learning model (23c) .

6. The method according to any of the preceding claims, wherein the one or more processors execute prior to the deployment-and-sealing step (23)
- a device verification step (21), in which an identity and software integrity check on the edge device (EU1) is performed by an edge backend (EB), using an edge signing key (ESK) previously generated during an onboarding procedure.

7. The method according to any of the preceding claims,
- wherein the first PLC (PLC1) encodes an internal state in the response of the PLC-challenge-and-response step (33).

8. The method according to any of the preceding claims, wherein prior to the PLC-challenge-and-response step (33), the one or more processors execute
- a system startup step (31), performing a start-up of a system of the edge device (EU1) up to the point before loading the edge software module (EA1), and
- a software verification step (32), using the trusted platform module (TPM1) of the edge device (EU1) to ensure the integrity of software components on the edge device (EU1).

9. The method according to any of the preceding claims, wherein after the PLC-challenge-and-response step (33), the one or more processors execute
- a PCR measurement step (24), obtaining PCR values (PCR-V) from the trusted platform module (TPM1) of the edge device (EU1),
- a PLC update step (25), extending the PCR values (PCR-V) with a one-way hash of code and/or data of the edge software module (EA1),
- and a step in which the extended PCR values and an edge signing key (ESK) of the edge device (EU1) are securely deployed to the first PLC (PLC1).

10. Edge device (EU1),
- storing an edge software module (EA1) that has been deployed and sealed on the edge device (EU1) with the method according to any of the preceding claims.

11. Computer-readable storage media having stored thereon:
- instructions executable by one or more processors of a computer system, wherein execution of the instructions causes the computer system to perform the method according to one of the claims 1 to 9.

12. Computer program,
- which is being executed by one or more processors of a computer system and performs the method according to one of the claims 1 to 9.
